# EUROPEAN PATENT SPECIFICATION

(11) **EP 1 728 672 B1**
(45) Date of publication and mention of the grant of the patent: **02.04.2014**
(21) Application number: 06011088.9
(22) Date of filing: 30.05.2006
(51) Int. Cl.: B60L 11/18, B60L 11/02, B60K 23/08, B60K 17/356

(54) **Controller for a hybride four-wheel-drive vehicle**
Vorrichtung zur Steuerung eines hybrid vierradangetriebenen Fahrzeugs
Dispositif de commande pour véhicule hybride à quatre roues motrices

(30) Priority: 30.05.2005 JP 2005156509
(43) Date of publication of application: 06.12.2006
(73) Proprietor: HITACHI, LTD., Chiyoda-ku Tokyo 100-8280 (JP)
(72) Inventor: Fujiwara, Shin, Hitachinaka-shi Ibaraki 312-0062 (JP); Matsuzaki, Norikazu, Chiyoda-ku Tokyo 100-8220 (JP); Yokoyama, Takashi, Hitachinaka-shi Ibaraki 312-0062 (JP)
(74) Representative: MERH-IP Matias Erny Reichl Hoffmann

(56) References cited:
- EP-A2- 1 359 046
- JP-A- 2005 075 046
- US-A1- 2004 163 860
- US-B1- 6 442 454

## Description

### BACKGROUND OF THE INVENTION

### 1. Field of the Invention

The present invention relates to a controller for an electric four-wheel-drive vehicle, an electric driving system, and an electric four-wheel-drive vehicle using the controller. More particularly, the present invention relates to an electric four-wheel-drive vehicle controller which is suitable for use in an electric four-wheel-drive vehicle including a manual transmission and a clutch, an electric driving system, and an electric four-wheel-drive vehicle using the controller.

### 2. Description of the Related Art

Recently, an electric four-wheel-drive vehicle has been practiced in which front wheels or rear wheels are driven by an engine, and the rear wheels or the front wheels are driven by a motor. As an electric four-wheel-drive vehicle of the type using a manual transmission as a transmission and including a clutch disposed between an output shaft of an engine and an input shaft of the manual transmission, there is known a vehicle in which ordinary motor torque control is performed when the clutch is engaged, and motor torque control is performed depending on a road load when the clutch is disengaged, as disclosed in JP-A-2004-254374).

In JP 2005 075046 A, a start control device for a motor four-wheel drive vehicle capable of ensuring a driving force is shown. The main driving wheels are driven by the engine, the driven wheels are driven by the electric motor and the electric motor is driven by electric energy generated by the engine. The transmission having the clutch and the transmission mechanism is interposed between the engine and the main driving wheels.

### SUMMARY OF THE INVENTION

In the related art disclosed in JP-A-2004-254374, however, the motor torque control is described only for the state where the clutch is engaged or disengaged. Accordingly, smooth running performance of the vehicle cannot be ensured when the clutch comes into a partially engaged state at starting or shifting of the vehicle.

An object of the present invention is to provide a controller for an electric four-wheel-drive vehicle, which can ensure smooth running performance of the vehicle, an electric driving system, and an electric four-wheel-drive vehicle using the controller.
(1) To achieve the above object, the present invention provides a controller for an electric four-wheel-drive vehicle in which a first wheel is driven by an engine, a second wheel is driven by a motor, and a driving force of the engine is transmitted to the first wheel through a manual transmission and a clutch, the controller being used in the four-wheel-drive vehicle to control driving of the motor, wherein the controller includes a control unit for, when the clutch is in a partially engaged state, receiving an input signal representing a degree of engagement of the clutch and outputting a signal to control a driving force of the motor in accordance with the input signal.
   With that feature, smooth running performance of the vehicle can be ensured.
(2) The control unit outputs the signal to gradually increase the driving force of the motor as the engagement of the clutch is progressed, when the electric four-wheel-drive vehicle starts running and no slips occur in the first and second wheels.
(3) In above (2)it is possible that the control unit outputs the signal to set the driving force of the motor to 0, when the clutch is positioned near a disengaged position thereof.
(4) In above (2) it is possible that the control unit outputs the signal to set the driving force of the motor to a predetermined driving force, when depression of an accelerator pedal of the electric four-wheel-drive vehicle is detected.
(5) In above (1) it is possible that the control unit outputs the signal to gradually decrease the driving force of the motor as disengagement of the clutch is progressed and to gradually increase the driving force of the motor as the engagement of the clutch is progressed, when the electric four-wheel-drive vehicle is under shifting.
(6) Also it is possible to provide a controller for an electric four-wheel-drive vehicle in which a first wheel is driven by an engine, a second wheel is driven by a motor, and a driving force of the engine is transmitted to the first wheel through a manual transmission and a clutch, the controller being used in the four-wheel-drive vehicle to control driving of the motor, wherein the controller includes a control unit for, when the clutch is in a partially engaged state, outputting a signal to control a driving force of the motor depending on an engagement rate of the clutch.
   With that feature, smooth running performance of the vehicle can be ensured.
(7) Further, it is possible to provide a controller for an electric four-wheel-drive vehicle in which a first wheel is driven by an engine, a second wheel is driven by a motor, and a driving force of the engine is transmitted to the first wheel through a manual transmission and a clutch, the controller being used in the four-wheel-drive vehicle to control driving of the motor, wherein the controller includes a control unit for, when the clutch is in a partially engaged state, outputting a signal to control a driving force of the motor depending on an engagement force of the clutch.
   With that feature, smooth running performance of the vehicle can be ensured.
(8) Still further, it is possible to provide an electric driving system for use in an electric four-wheel-drive vehicle in which a first wheel is driven by an engine, a second wheel is driven by a motor, and a driving force of the engine is transmitted to the first wheel through a manual transmission and a clutch, wherein the electric driving system comprises a generator driven by the engine, the motor for driving the second wheel, and a controller for controlling electric power generated by the generator and controlling driving of the motor, and wherein the controller includes a control unit for, when the clutch is in a partially engaged state, receiving an input signal representing a degree of engagement of the clutch and outputting a signal to control a driving force of the motor in accordance with the input signal.
   With that feature, smooth running performance of the vehicle can be ensured.
(9) Still further, it is possible to provide an electric four-wheel-drive vehicle comprising an engine for driving a first wheel, a motor for driving a second wheel, a generator driven by the engine, and a controller for controlling electric power generated by the generator and controlling driving of the motor, wherein a driving force of the engine is transmitted to the first wheel through a manual transmission and a clutch, and wherein the controller includes a control unit for, when the clutch is in a partially engaged state, receiving an input signal representing a degree of engagement of the clutch and outputting a signal to control a driving force of the motor in accordance with the input signal.

With that feature, smooth running performance of the vehicle can be ensured.

According to the present invention, in the electric four-wheel-drive vehicle, it is possible to realize smooth running performance of the vehicle.

### BRIEF DESCRIPTION OF THE DRAWINGS

Fig. 1 is a system block diagram showing the overall construction of an electric four-wheel-drive vehicle equipped with a controller for an electric four-wheel-drive vehicle according to one embodiment of the present invention;
Fig. 2 is a block diagram showing the configuration of the controller for the electric four-wheel-drive vehicle according to one embodiment of the present invention;
Fig. 3 is a block diagram showing the configuration of a motor torque computing unit in the controller for the electric four-wheel-drive vehicle according to one embodiment of the present invention;
Fig. 4 is a graph for explaining a method of computing torque at starting, which is executed by a clutch responsive torque (TQCL) computing unit in the controller for the electric four-wheel-drive vehicle according to one embodiment of the present invention;
Fig. 5 is a graph for explaining a method of computing torque, which is executed by a slip responsive torque (TQDV) computing unit in the controller for the electric four-wheel-drive vehicle according to one embodiment of the present invention;
Fig. 6 is a graph for explaining a method of computing torque at starting, which is executed by a clutch responsive torque (TQCL) computing unit in the controller for the electric four-wheel-drive vehicle according to one embodiment of the present invention;
Fig. 7 is a block diagram showing the configuration of a driver unit in the controller for the electric four-wheel-drive vehicle according to one embodiment of the present invention;
Fig. 8 is a flowchart showing the operation of a clutch engagement determining unit in the controller for the electric four-wheel-drive vehicle according to one embodiment of the present invention;
Fig. 9 is a timing chart showing the operation executed at starting by the controller for the electric four-wheel-drive vehicle according to one embodiment of the present invention; and
Fig. 10 is a timing chart showing the operation executed at shifting by the controller for the electric four-wheel-drive vehicle according to one embodiment of the present invention.

### DESCRIPTION OF THE PREFERRED EMBODIMENTS

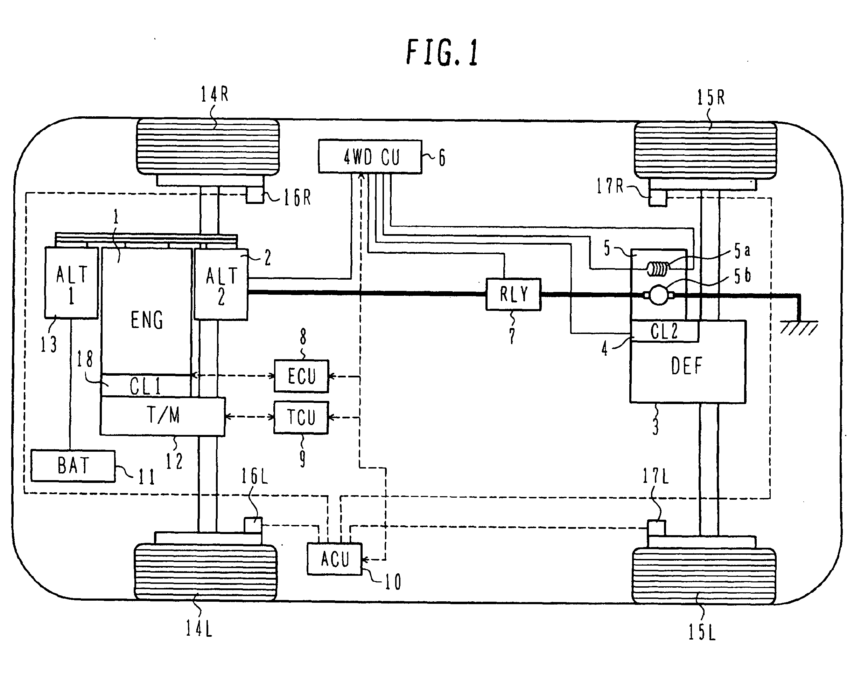

The configuration and operation of a controller for an electric four-wheel-drive vehicle according to one embodiment of the present invention will be described below with reference to Figs. 1-10.

First, with reference to Fig. 1, a description is made of the overall construction of an electric four-wheel-drive vehicle equipped with the controller for the electric four-wheel-drive vehicle according to one embodiment of the present invention.

Fig. 1 is a system block diagram showing the overall construction of the electric four-wheel-drive vehicle equipped with the controller for the electric four-wheel-drive vehicle according to one embodiment of the present invention.

The electric four-wheel-drive vehicle according to the embodiment includes an engine (ENG) 1 and a motor 5 each of which serves as a driving force source. The driving force of the engine 1 is transmitted to left and right front wheels 14R, 14L through a clutch (CL1) 18, a manual transmission (T/M) 12, and a first axle (front axle) so that the front wheels 14R, 14L are driven. More specifically, when the clutch 18 is engaged, the rotating force of the engine 1 is transmitted to the front axle through the clutch 18 and the manual transmission 12, thereby driving the front wheels 14R, 14L. When the clutch 18 is disengaged, the engine 1 is mechanically disconnected from the side of the front wheels 14R, 14L, and therefore the front wheels 14R, 14L transmit no driving forces to the road surface. The engagement and the disengagement of the clutch 18 are operated by a driver through a clutch pedal.

The driving force of the motor 5 is transmitted to left and right rear wheels 15R, 15L through a clutch (CL2) 4, a differential gear (DEF) 3, and a second axle (rear axle) so that the rear wheels 15R, 15L are driven. More specifically, when the clutch 4 is engaged, the rotating force of the motor 5 is transmitted to the rear axle through the clutch 4 and the differential gear 3, thereby driving the rear wheels 15R, 15L. When the clutch 4 is disengaged, the motor 5 is mechanically disconnected from the side of the rear wheels 15R, 15L, and therefore the rear wheels 15R, 15L transmit no driving forces to the road surface. The engagement and the disengagement of the clutch 4 are controlled by a four-wheel-drive (4WD) control unit (4WDCU) 6.

At ordinary starting, when no slips occur such as in the case of starting on, e.g., a dry road (high-µ road) (i.e., when a front wheel (vehicle) speed and a rear wheel (vehicle) speed are equal to each other), the 4WDCU 6 engages the clutch 4 during a period from the starting time until a wheel speed (average value of the front wheel speed and the rear wheel speed) reaches 5 km/h. When the wheel speed exceeds 5 km/h, the 4WDCU 6 disengages the clutch 4. Also, when a slip occurs such as in the case of starting on, e.g., a wet road (low-µ road) (i.e., when the front wheel (vehicle) speed and the rear wheel (vehicle) speed differ from each other), the 4WDCU 6 usually engages the clutch 4 during a period from the starting time until the wheel speed (average value of the front wheel speed and the rear wheel speed) reaches 30 km/h. When the wheel speed exceeds 30 km/h, the 4WDCU 6 disengages the clutch 4. Further, when the clutch 18 is in a partially engaged state or a disengaged state during the shifting, the 4WDCU 6 engages the clutch 4 regardless of the vehicle speed.

Here, the term "the partially engaged state of the clutch 18" means a state where a clutch engagement rate is larger than 0% and smaller than 100%, and the clutch 18 transmits torque while slipping. In the embodiment, when the clutch 18 is in the partially engaged state at, e.g., the starting or the shifting, the 4WDCU 6 computes torque of the motor 5 corresponding to the degree of engagement of the clutch and controls the motor 5 such that the motor 5 outputs the computed torque.

The motor 5 is constituted, for example, as a DC shunt motor or a separately excited DC motor which is easy to change over the motor rotation between forward and backward directions. Alternatively, an AC-driven 3-phase synchronous motor can also be used as the motor 5. While the above description is made of the electric four-wheel-drive vehicle having the front wheels 14R, 14L driven by the engine 1 and the rear wheels 15R, 15L driven by the motor 5, the vehicle may be modified so as to drive the front wheels by the motor and to drive the rear wheels by the engine.

In an engine room, there are disposed an auxiliary generator (ALT1) 13, which serves as an ordinary charging/generating system for auxiliaries, and an auxiliary battery (BAT) 11. The auxiliary generator 13 is driven by the engine 1 through a belt, and its output is accumulated in the auxiliary battery 11.

Near the auxiliary generator 13, a high-output generator (ALT2) 2 is disposed. The high-output generator (ALT2) 2 is driven by the engine 1 through a belt, and the motor 5 is driven by an output of the high-output generator (ALT2) 2. Electric power generated by the high-output generator (ALT2) 2 is controlled by the 4WDCU 6. When the electric power generated by the high-output generator (ALT2) 2 is changed, an output of the motor 5, i.e., motor torque, is also changed. More specifically, the 4WDCU 6 outputs a command value (i.e., a duty signal for setting a field current value of the high-output generator to a predetermined value) for the output of the high-output generator (ALT2) 2, whereupon the electric power generated by the high-output generator (ALT2) 2 is changed. The electric power generated by the high-output generator (ALT2) 2 is applied to an armature coil 5b of the motor 5, whereby the output of the motor 5 (i.e., the motor torque) is changed. Thus, the 4WDCU 6 controls the output of the motor 5 (i.e., the motor torque) by controlling the output of the high-output generator 2 (i.e., the generated electric power). Further, in a range where the motor 5 rotates at high speeds, the 4WDCU 6 executes field weakening control for a field current supplied to a field coil 5a of the motor 5, to thereby directly control the motor 5 so that the motor 5 can rotate at the high speeds.

The output of the engine 1 is controlled by an electronic control throttle (not shown) which is driven in accordance with a command from an engine control unit (ECU) 8. The electronic control throttle is provided with an accelerator opening sensor (not sown) for detecting an accelerator opening (i.e., a throttle opening). When an accelerator pedal and a throttle coupled to each other through a mechanical link are used instead of the electronic control throttle, the accelerator opening sensor may be associated with the accelerator pedal. Additionally, the clutch 18 capable of being operated by the driver through the clutch pedal is disposed between the engine 1 and the manual transmission 12, thus allowing the driving force of the engine 1 to be adjusted in accordance with the driver's intention. The clutch 18 is provided with a clutch position sensor capable of detecting the engagement and the disengagement of the clutch 18, and a sensor output is taken into the 4WDCU 6.

A manual transmission control unit (TCU) 9 controls the manual transmission 12. An output of the accelerator opening sensor is also taken into the 4WDCU 6.

The front wheels 14R, 14L and the rear wheels 15R, 15L are provided with wheel speed sensors 16R, 16L, 17R and 17L for detecting respective rotation speeds. Further, a brake is provided with an antilock brake actuator which is controlled by an antilock brake control unit (ACU) 10.

Various signal lines can be introduced to the 4WD control unit (4WDCU) 6 from respective interfaces of the engine control unit (ECU) 8, the manual transmission control unit (TCU) 9, and other control units via an internal LAN (CAN) bus.

A large-capacity relay (relay; RLY) 7 is disposed between the high-output generator 2 and the motor 5 such that the output of the high-output generator 2 can be selectively cut. Opening and closing of the relay 7 are controlled by the 4WDCU 6.

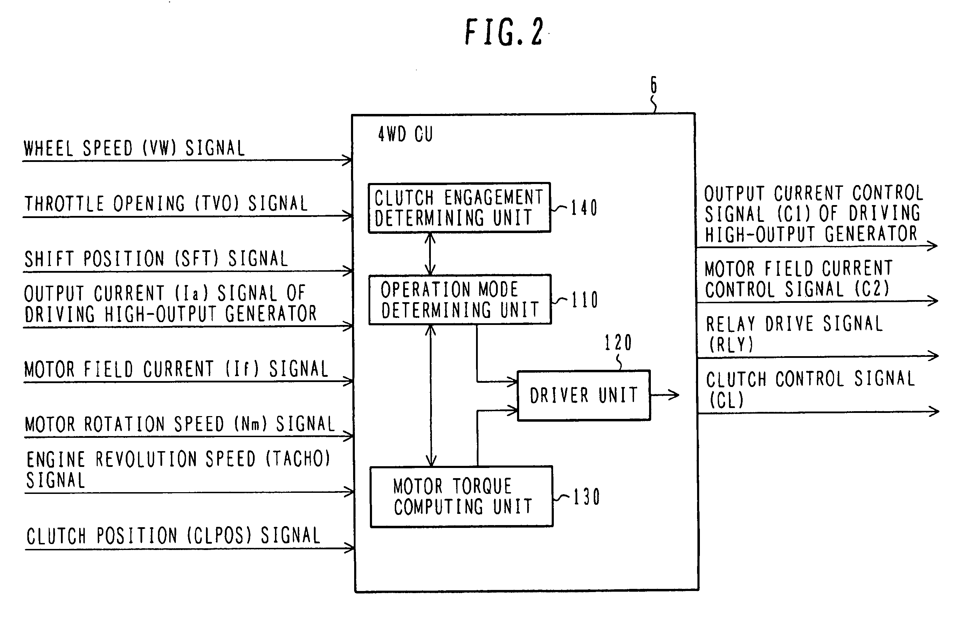

The configuration of the controller for the electric four-wheel-drive vehicle according to the embodiment will be described below with reference to Fig. 2.

Fig. 2 is a block diagram showing the configuration of the controller for the electric four-wheel-drive vehicle according to one embodiment of the present invention.

The 4WDCU 6 includes an operation mode determining unit 110, a driver unit 120, a motor torque computing unit 130, and a clutch engagement determining unit 140. The 4WDCU 6 receives, as input signals, various signals representing a wheel speed (VW), a (accelerator) throttle opening (TVO), a shift position (SFT), a motor armature current (Ia), a motor field current (If), a motor rotation speed (Nm), an engine revolution speed (TACHO), and a clutch position (CLPOS).

The wheel speed signal (VW) includes four signals representing a front right wheel speed VWF_RH, a front left wheel speed VWF_LH, a rear right wheel speed VWR_RH, and a rear left wheel speed VWR_LH detected respectively by the wheel speed sensors 16R, 16L, 17R and 17L. The 4WDCU 6 computes a rear wheel average speed VWR as an average value of the rear right wheel speed VWR_RH and the rear left wheel speed VWR_LH. Also, the 4WDCU 6 computes a front wheel average speed VWF as an average value of the front right wheel speed VWF_RH and the front left wheel speed VWF_LH. Further, the 4WDCU 6 computes a wheel speed (vehicle speed) as an average value of the rear wheel average speed VWR and the front wheel average speed VWF.

The accelerator throttle opening signal (TVO) is inputted as an output of the accelerator opening sensor. The 4WDCU 6 produces an accelerator on-signal when the accelerator opening sensor signal (TVO) reaches 3% of the accelerator opening, and produces an accelerator off-signal when the accelerator opening sensor signal (TVO) is less than 3% of the accelerator opening. Alternatively, a threshold used for the on/off determination may be given with a hysteresis characteristic such that the threshold for determining the accelerator to be turned on is set to 3%, and the threshold for determining the accelerator to be turned off is set to 1%.

The shift position signal (SFT) is inputted as an output of a shift position sensor disposed near a shift lever. Herein, the inputted signal represents in which one of first-, second-, third-, fourth- and fifth-speed ranges is the shift position.

The motor armature current signal (Ia) represents an output current of the high-output generator (ALT2) 2, which is supplied to the armature coil 5b of the motor 5. The motor field current signal (If) represents a field current supplied to the field coil 5a of the motor 5. The motor rotation speed signal (Nm) is a signal representing the rotation speed of the motor 5. The engine revolution speed signal (TACHO) is a signal representing the revolution speed of the engine 1.

The clutch position signal (CLPOS) is a signal representing the engagement state of the clutch 18, i.e., a clutch plate position signal.

The operation mode determining unit 110 determines a four-wheel drive mode based on the wheel speed signal (VW), the accelerator opening signal (TVO), and the shift position signal (SFT). Modes to be determined include a 2WD mode (operation mode 2), a 4WD standby mode (operation mode 3), a vehicle creep mode (operation mode 4), a 4WD mode (operation mode 5), and a 4WD-stop sequence mode (operation mode 6).

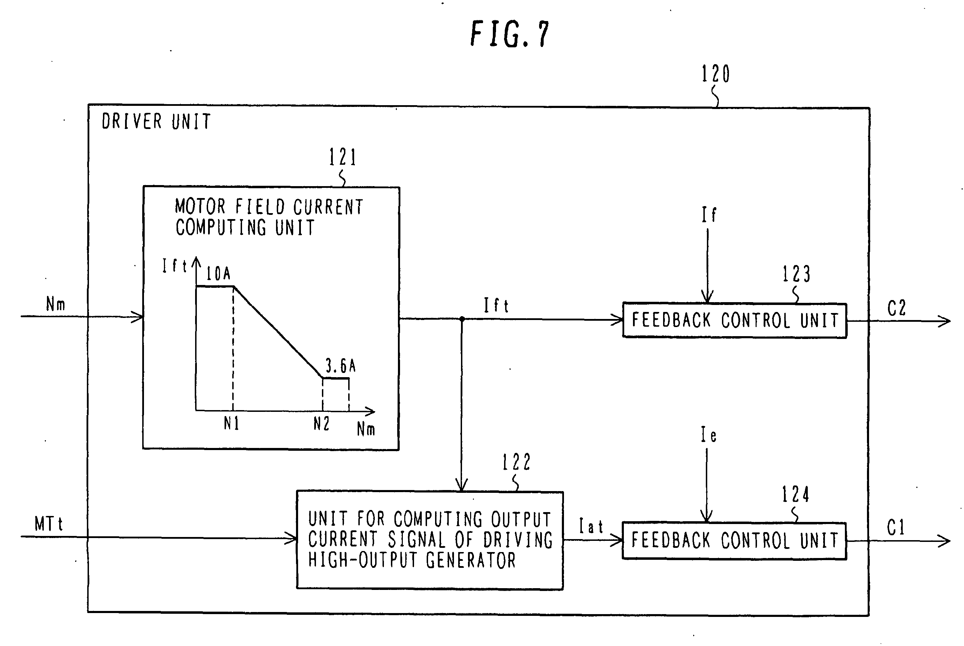

The driver unit 120 outputs a generator field current control signal (C1) for controlling a field current supplied to a field coil of the high-output generator (ALT2) 2, a motor field current control signal (C2) for controlling the field current supplied to the field coil 5a of the motor 5, a relay drive signal (RLY) for controlling the opening and closing of the relay 7, and a clutch control signal (CL) for controlling the engagement and the disengagement of the clutch 4 based on both the operation mode (one of the operation modes 2, ..., 6) determined by the operation mode determining unit 110 and the motor torque computed by the motor torque computing unit 130. Details of the driver unit 120 will be described later with reference to Fig. 7.

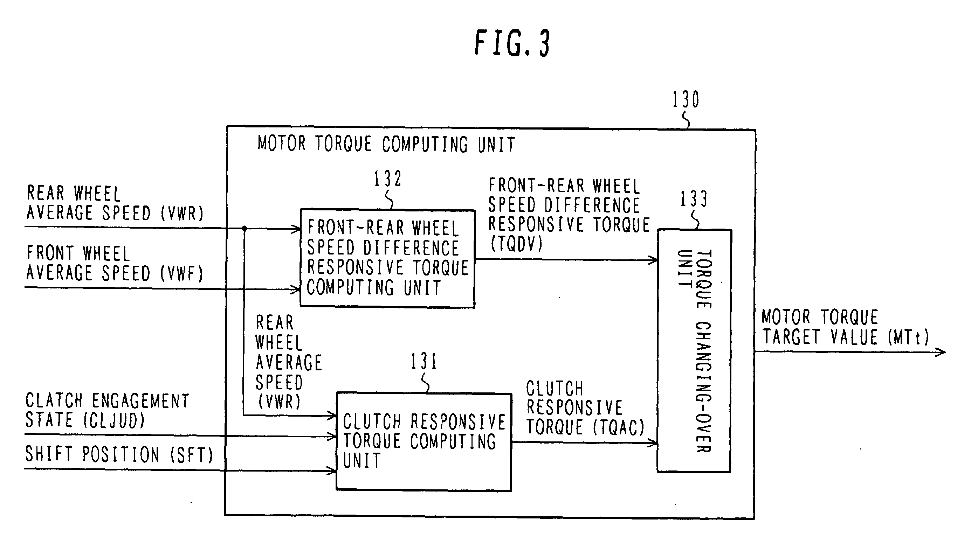

The motor torque computing unit 130 computes the required motor torque corresponding to the vehicle speed and the difference in vehicle speed between the front and rear wheels. Details of the motor torque computing unit 130 will be described below with reference to Fig. 3.

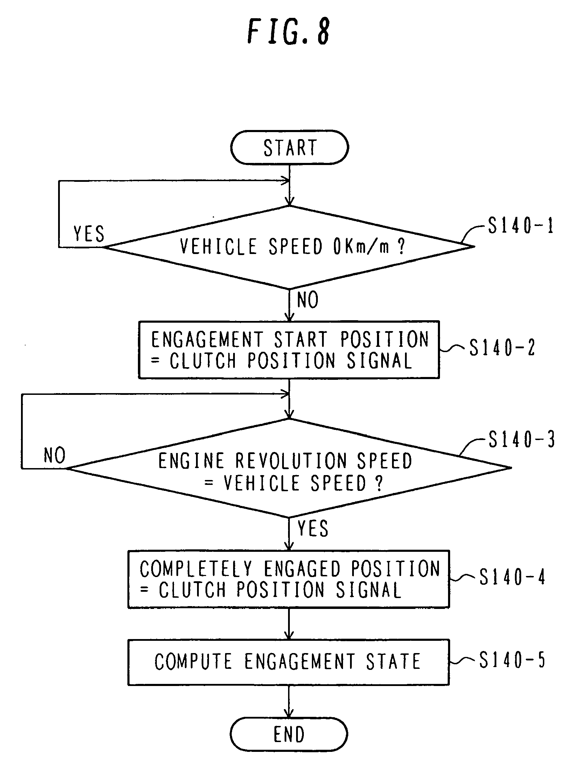

The clutch engagement determining unit 140 determines a clutch engagement state based on the clutch position signal (CLPOS), the wheel speed signal (VW), and the motor rotation speed signal (Nm). Details of the clutch engagement determining unit 140 will be described later with reference to Fig. 8.

The configuration of the motor torque computing unit 130 in the controller for the electric four-wheel-drive vehicle according to the embodiment will be described below with reference to Fig. 3.

Fig. 3 is a block diagram showing the configuration of the motor torque computing unit in the controller for the electric four-wheel-drive vehicle according to one embodiment of the present invention.

The motor torque computing unit 130 includes a clutch responsive torque (TQCL) computing unit 131, a slip (front-rear wheel speed difference) responsive torque (TQDV) computing unit 132, and a torque changing-over unit 133.

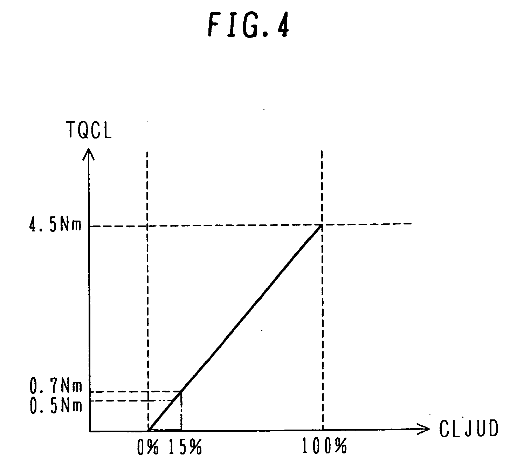

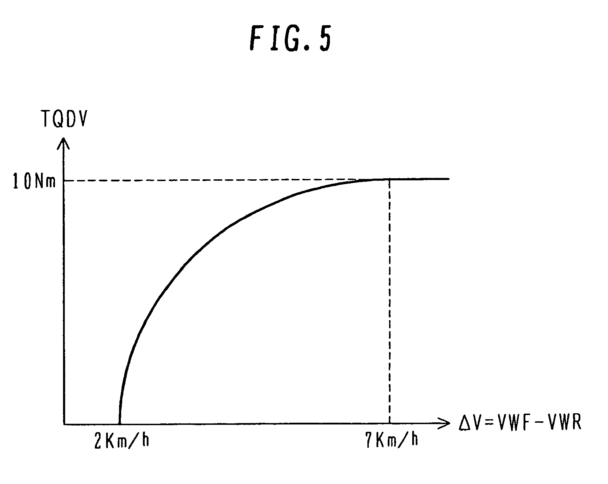

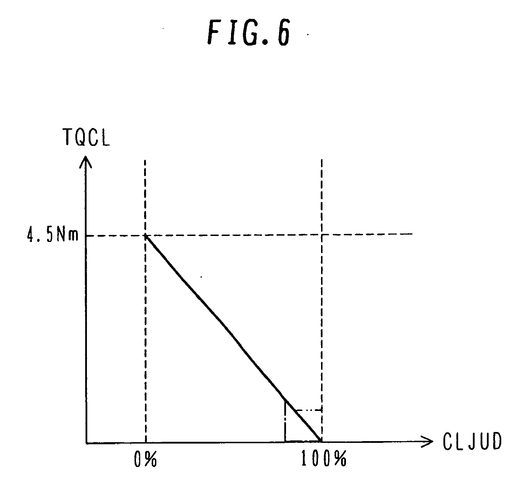

The clutch responsive torque (TQCL) computing unit 131 computes the torque to be outputted from the motor 5 when the vehicle is running on a dry road, etc. A torque computing method executed by the clutch responsive torque (TQCL) computing unit 131 will be described below with reference to Figs. 4 and 6. The slip responsive torque (TQDV) computing unit 132 computes the torque to be outputted from the motor 5 when a wheel slip is detected during running on a low-µ road, etc. A torque computing method executed by the slip responsive torque (TQDV) computing unit 132 will be described later with reference to Fig. 5. The torque changing-over unit 133 outputs, as a motor torque target value (MTt), larger one of clutch responsive torque (TQCL) computed by the clutch responsive torque (TQCL) computing unit 131 and slip responsive torque (TQDV) computed by the slip (front-rear wheel speed difference) responsive torque (TQDV) computing unit 132.

With reference to Fig. 4, a description is now made of the operation executed at starting by the clutch responsive torque (TQCL) computing unit 131 in the controller for the electric four-wheel-drive vehicle according to the embodiment.

Fig. 4 is a graph for explaining a method of computing torque at starting, which is executed by the clutch responsive torque (TQCL) computing unit in the controller for the electric four-wheel-drive vehicle according to one embodiment of the present invention. In the graph of Fig. 4, the horizontal axis represents the clutch engagement state (CLJUD). The vertical axis in the graph of Fig. 4 represents the clutch responsive torque (TQCL).

As shown in Fig. 4, when the clutch engagement state (CLJUD) takes a rate of 0%, the clutch responsive torque (TQCL) computing unit 131 outputs, for example, 0 Nm as the clutch responsive torque (TQCL), and when the clutch engagement state (CLJUD) takes a rate of 100%, the clutch responsive torque (TQCL) computing unit 131 outputs 4.5 Nm. When the clutch engagement state (CLJUD) takes a rate in the range of 0% - 100%, the clutch responsive torque (TQCL) computing unit 131 outputs, as shown in Fig. 4, a value of the clutch responsive torque (TQCL) linearly changing over the range of, for example, 0 Nm - 4.5 Nm. However, when the wheel speed signal (VW) is higher than 5 km/h, the clutch responsive torque (TQCL) computing unit 131 outputs, for example, 0 Nm as the clutch responsive torque (TQCL).

Also, in order to increase the starting performance, upon the accelerator pedal being depressed when the clutch engagement state (CLJUD) is other then 0%, the clutch responsive torque (TQCL) computing unit 131 computes, for example, 4.5 Nm as the clutch responsive torque (TQCL). This is because the driver's intention to start the vehicle is apparent from the fact that the driver is going to engage the clutch 18 and the accelerator pedal is depressed.

Alternatively, as indicated by a one-dot-chain line in Fig. 4, when the clutch engagement state (CLJUD) takes a rate in a small range, e.g., in the range of 0% - 15%, the clutch responsive torque (TQCL) computing unit 131 may output, for example, 0 Nm as the clutch responsive torque (TQCL). Further, when the clutch engagement state (CLJUD) takes a rate in the range of 15% - 100%, it may output a value of the clutch responsive torque (TQCL) linearly changing over the range of, for example, 0.7 Nm - 4.5 Nm as shown. The reason is as follows. When the clutch engagement state (CLJUD) takes a rate in a small range, the engine torque is hardly transmitted to the front wheels. Correspondingly, the torque transmitted from the motor to the rear wheels is also maintained at 0 so that the torque is not applied only from the rear wheel side.

Furthermore, the setting may be modified as indicated by a two-dot-chain line in Fig. 4. More specifically, when the clutch engagement state (CLJUD) takes a rate in the small range, the clutch responsive torque (TQCL) computing unit 131 may output, for example, 0.5 Nm as the clutch responsive torque (TQCL). This modification is intended to make matching with the case where the motor torque of, e.g., 0.5 Nm is outputted in the 4WD standby mode to perform creep operation by the motor, as described later, for the purpose of starting preparations.

With reference to Fig. 5, a description is now made of the operation of the slip responsive torque (TQDV) computing unit 132 in the controller for the electric four-wheel-drive vehicle according to the embodiment.

Fig. 5 is a graph for explaining a method of computing torque, which is executed by the slip responsive torque (TQDV) computing unit in the controller for the electric four-wheel-drive vehicle according to one embodiment of the present invention. In the graph of Fig. 5, the horizontal axis represents a difference (DV) between the front and rear wheel speeds. The front-rear wheel speed difference (DV) is obtained as (front wheel speed (VWF) - rear wheel speed (VWR)). The vertical axis in the graph of Fig. 5 represents the slip responsive torque (TQDV).

As shown in Fig. 5, when the front-rear wheel speed difference (DV) is smaller than 2 km/h, the slip responsive torque (TQDV) computing unit 132 outputs, for example, 0 Nm as the slip responsive torque (TQDV). When the front-rear wheel speed difference (DV) is in the range of 2 km/h - 7 km/h, the slip responsive torque (TQDV) computing unit 132 outputs torque increasing from 0 Nm to 10 Nm, for example, depending on the front-rear wheel speed difference (DV) as shown. When the front-rear wheel speed difference (DV) is larger than 7 km/h, the slip responsive torque (TQDV) computing unit 132 outputs, for example, 10 Nm as the slip responsive torque (TQDV).

With reference to Fig. 6, a description is now made of the operation executed at shifting by the clutch responsive torque (TQCL) computing unit 131 in the controller for the electric four-wheel-drive vehicle according to the embodiment.

Fig. 6 is a graph for explaining a method of computing torque at shifting, which is executed by the clutch responsive torque (TQCL) computing unit in the controller for the electric four-wheel-drive vehicle according to one embodiment of the present invention. In the graph of Fig. 6, the horizontal axis represents the clutch engagement state (CLJUD). The vertical axis in the graph of Fig. 6 represents the clutch responsive torque (TQCL).

As shown in Fig. 6, when the clutch engagement state (CLJUD) takes a rate of 0%, the clutch responsive torque (TQCL) computing unit 131 outputs, for example, 4.5 Nm as the clutch responsive torque (TQCL), and when the clutch engagement state (CLJUD) takes a rate of 100%, the clutch responsive torque (TQCL) computing unit 131 outputs 0 Nm.

Alternatively, as indicated by a one-dot-chain line in Fig. 6, when the clutch engagement state (CLJUD) takes a rate in a large range, e.g., in the range of 85% - 100%, the clutch responsive torque (TQCL) computing unit 131 may output, for example, 0 Nm as the clutch responsive torque (TQCL). Further, when the clutch engagement state (CLJUD) takes a rate of in the range of 0% - 85%, it may output a value of the clutch responsive torque (TQCL) linearly changing over the range of, for example, 4.5 Nm - 0.7 Nm as shown.

Furthermore, as indicated by a two-dot-chain line Fig. 6, when the clutch engagement state (CLJUD) takes a rate in the large range, the clutch responsive torque (TQCL) computing unit 131 may output, as the clutch responsive torque (TQCL), torque equal to that in the 4WD-stop sequence mode described later.

The configuration of the driver unit 120 in the controller for the electric four-wheel-drive vehicle according to the embodiment will be described below with reference to Fig. 7.

Fig. 7 is a block diagram showing the configuration of the driver unit in the controller for the electric four-wheel-drive vehicle according to one embodiment of the present invention.

The driver unit 120 includes a unit 121 for computing a motor field current target value (Ift), a unit 122 for computing a motor armature current target value (Iat), and feedback control units 123 and 124 for performing current feedback control of a motor field current and a motor armature current.

The motor field-current target value (Ift) computing unit 121 computes the current supplied to the field coil 5a of the motor 5 based on the motor rotation speed signal (Nm) inputted to the 4WDCU 6 shown in Fig. 2. For example, as shown in Fig. 7, when the motor rotation speed signal (Nm) is not higher than N1, the motor field-current target value (Ift) computing unit 121 sets the motor field current target value (Ift) to 10 A. When the motor rotation speed signal (Nm) is in the range of N1 to N2, the computing unit 121 gradually reduces the motor field current target value (Ift) from 10 A to 3.0 A. Further, when the motor rotation speed signal (Nm) is not smaller than N2, the computing unit 121 sets the motor field current target value (Ift) to 3.0 A. In other words, when the motor 5 rotates at high speeds, the field weakening control is executed so that the motor 5 can rotate at the high speeds. A difference between the motor field-current target value (Ift) and an actually detected field current value (If) of the motor 5 is detected and the current supplied to the field coil 5a of the motor 5 (herein, a motor field-current control signal (C2)) representing a duty ratio of a duty signal for switching a power converter) is changed to execute feedback control so that the difference is 0.

The motor armature-current target value (Iat) computing unit 122 computes a motor armature current target value (Iat) by using a map based on both the motor torque target value (MTt) outputted from the motor torque computing unit 130 and the motor field-current target value (Ift) outputted from the motor field-current target value (Ift) computing unit 121.

A difference between the motor armature-current target value (Iat) and an actually detected motor armature current value (Ia) is computed and the current supplied to the field coil of the high-output generator (ALT2) 2 (herein, a duty ratio of a duty signal for switching a power converter) is changed to execute feedback control so that the difference is 0.

The operation of the clutch engagement determining unit 140 in the controller for the electric four-wheel-drive vehicle according to the embodiment will be described below with reference to Fig. 8.

Fig. 8 is a flowchart showing the operation of the clutch engagement determining unit in the controller for the electric four-wheel-drive vehicle according to one embodiment of the present invention.

The clutch engagement determining unit 140 determines the clutch engagement state based on the clutch position signal (CLPOS), the wheel speed signal (VW), and the motor rotation speed signal (Nm).

In step S140-1, the clutch engagement determining unit 140 determines based on the wheel speed signal (VW) whether the vehicle is stopped. When the vehicle starts from the stopped state and the wheel speed signal (VW) is increased from 0 km/h, i.e., as soon as the vehicle starts running, the clutch engagement determining unit 140 sets the clutch position signal (CLPOS) to represent a clutch engagement start position (CLSRT) in step S140-2.

Then, in step S140-3, the clutch engagement determining unit 140 converts the wheel speed signal (VW) to a rotation speed (rpm) of a clutch shaft based on both the tire's dynamic radius and a speed reduction ratio of the manual transmission 12, followed by comparing the converted rotation speed with the engine revolution speed (TACHO). When the vehicle is stopped, the clutch 18 is in the disengaged state and the wheel speed signal (VW) is 0 km/h. Namely, the rotation speed of the clutch shaft is also 0 r/min. When the vehicle starts running, the clutch 18 is gradually brought into the engaged state. Therefore, the rotation speed of the clutch shaft converted from the wheel speed signal (VW) gradually approaches the engine revolution speed (TACHO), and when the former matches with the latter, this can be said as representing a completely engaged state of the clutch.

In consideration of the above, if the converted rotation speed of the clutch shaft and the engine revolution speed are matched with each other, the clutch engagement determining unit 140 sets the clutch position signal (CLPOS) to represent the completely engaged position (CLEND) in step S140-4.

Then, in step S140-5, the clutch engagement determining unit 140 defines, based on the engagement start position (CLSRT) and the completely engaged position (CLEND), a difference between those two positions as a clutch engagement range (CLDPM). If the clutch position signal (CLPOS) represents the completely engaged position (CLEND), the clutch engagement state (CLJUD) is set to 100%, and if the clutch position signal (CLPOS) represents the clutch engagement start position (CLSRT), the clutch engagement state (CLJUD) is set to 0%. Further, the clutch engagement state between the two positions is computed by interpolation.

The clutch engagement start position (CLSRT) and the completely engaged position (CLEND) are computed as learning values each time the vehicle start running. If the computed values are compared to the corresponding values in the preceding cycle and are within an appropriate range, it is possible to compute a worn state of the clutch 18 by taking an average of the values in the present and preceding cycles. When the vehicle starts running on a sloped road, the computed values do not fall within the appropriate range in comparison with the corresponding values in the preceding cycle, and therefore those computed values may be excluded. The clutch engagement start position (CLSRT) and the completely engaged position (CLEND) are written in a rewritable memory region and are not erased even when the power supply of the 4WDCU 6 is turned off.

The clutch position signal (CLPOS) may be, e.g., a clutch pedal position signal or a clutch plate position signal. Namely, it may be a signal detected at any suitable position related to the engagement and the disengagement of the clutch 18.

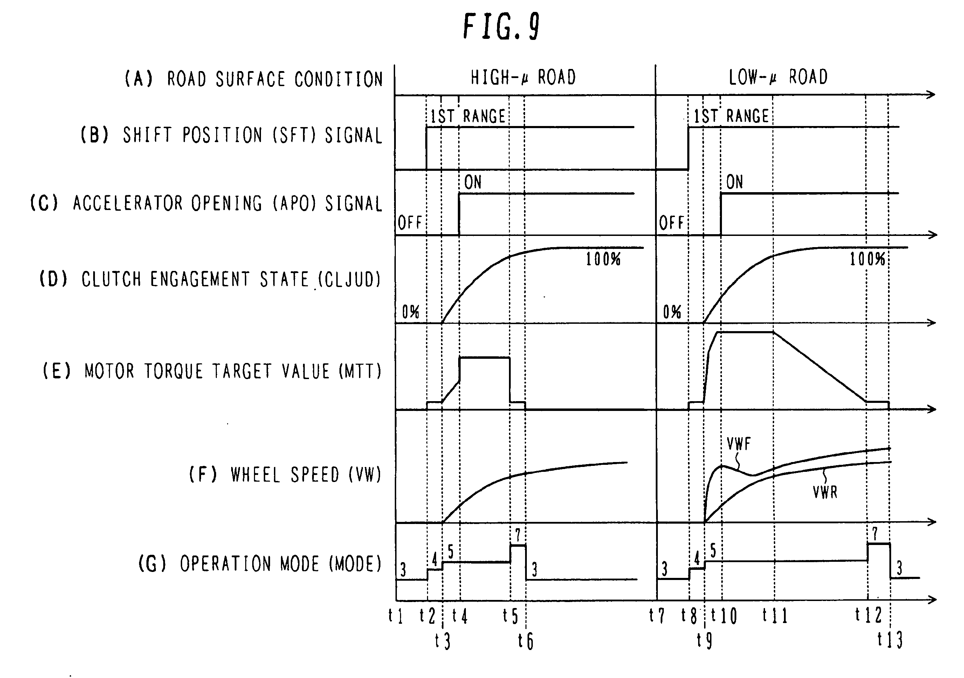

The operation executed at starting by the controller for the electric four-wheel-drive vehicle according to the embodiment will be described below with reference to Fig. 9.

Fig. 9 is a timing chart showing the operation executed at starting by the controller for the electric four-wheel-drive vehicle according to one embodiment of the present invention. In Fig. 9, (A) indicates the road surface condition, (B) indicates the shift position signal (SFT), (C) indicates the accelerator opening signal (APO), (D) indicates the clutch engagement state (CLJUD), and (E) indicates the motor torque target value (MTt). Further, (F) in Fig. 9 indicates the front wheel speed (VWF) and the rear wheel speed (VWR), and (G) indicates the operation mode (MODE). The horizontal axis of Fig. 9 represents time. Also, as shown in Fig. 9(A), a period from a time t1 to t7 along the horizontal axis represents the operation when the vehicle runs on a dry road (high-µ road), and a period subsequent to the time t7 represents the operation when the vehicle runs on a wet road (low-µ road).

A description is first made of the operation in the running on the dry road (high-µ road) represented by the period from the time t1 to t7. Referring to Fig. 9, when the shift position signal (SFT) is in a neutral range at the time t1 as shown in Fig. 9(B), the operation mode determining unit 110 determines the operation mode (MODE) to be the operation mode 3 (MODE3), i.e., the 2WD mode (Fig. 9(G)). At this time, the motor torque computing unit 130 sets the motor torque target value (MTt) to, e.g., 0 Nm as shown in Fig. 9(E).

At a time t2, when the 4WDCU 6 detects that the shift position signal (SFT) is in a first (1ST) range as shown in Fig. 9(B), the operation mode determining unit 110 determines the operation mode (MODE) to be the operation mode 4 (MODE4), i.e., the 4WD standby mode (Fig. 9(G)). At this time, the motor torque computing unit 130 outputs, e.g., 0.5 Nm as the motor torque target value (MTt) to the driver unit 120 in Fig. 2, as shown in Fig. 9(E). Stated another way, the output torque of the motor 5 is set to, e.g., 0.5 Nm such that slight driving torque is transmitted to the rear wheels to maintain a standby state to be immediately responsible when the operation mode comes into the 4WD mode subsequently. The driver unit 120 outputs the generator field current control signal (C1) such that the motor torque is, e.g., 0.5 Nm.

Then, at a time t3, when the shift position signal (SFT) is in the 1ST range and the clutch engagement state (CLJUD) takes a value other than 0% as shown in Fig. 9(D), the operation mode determining unit 110 determines the operation mode (MODE) to be the operation mode 5 (MODE5), i.e., the 4WD mode (Fig. 9(G)). Then, the operation mode determining unit 110 notifies the motor torque computing unit 130 of the fact that the operation mode is the operation mode 5 (MODE5), i.e., the 4WD mode.

The clutch responsive torque (TQCL) computing unit 131 of the motor torque computing unit 130 outputs the clutch responsive torque (TQCL) depending on the clutch engagement state (CLJUD) shown in Fig. 9(D). Because the vehicle speed is not higher than 5 km/h, the clutch responsive torque (TQCL) is computed as a value depending on the clutch engagement state (CLJUD), i.e., a value between 0 Nm and 4.5 Nm. As the clutch engagement rate increases, the clutch responsive torque (TQCL) is also increased. On other hand, since the vehicle is assumed to run on the dry road in this case, the engine 1 causes no slips and the slip responsive torque (TQDV) computing unit 132 does not generate the slip responsive torque (TQDV). The torque changing-over unit 133 compares the clutch responsive torque (TQCL) and the slip responsive torque (TQDV) with each other and then outputs larger one of them as the motor torque target value (MTt). In other words, as the clutch engagement rate is increased depending on the gradual progress of the clutch engagement, the motor torque target value (MTt) is also increased as shown in Fig. 9(E).

At a time t4, when the shift position signal (SFT) is in the 1ST range, the clutch engagement state (CLJUD) takes a value other than 0%, and the accelerator opening signal (APO) is turned on as shown in Fig. 9(C), the clutch responsive torque (TQCL) computing unit 131 of the motor torque computing unit 130 determines that the driver intends to start running, and it outputs 4.5 Nm as shown in Fig. 9(E). As a result, acceleration performance at starting is increased and starting performance in the four-drive-wheel vehicle is increased.

During a period from the time t4 to t5, the clutch responsive torque (TQCL) computing unit 131 continuously outputs 4.5 Nm as its output torque. The motor torque target value (MTt) is maintained at 4.5 Nm until the rear wheel speed signal (VWR) reaches 5 km/h.

At the time t5, when the rear wheel speed signal (VWR) shown in Fig. 9(F) reaches 5 km/h, the operation mode determining unit 110 determines the commencement of the 4WD-stop sequence mode and notifies the driver unit 120 of the fact that the operation mode is the operation mode 6 (MODE6), i.e., the 4WD-stop sequence mode. Responsively, the driver unit 120 outputs predetermined torque. Here, the predetermined torque means torque corresponding to friction caused by backlash of the differential gear and torsion of the axle. In the 4WD-stop sequence mode, the clutch 4 is disengaged and thereafter the large-capacity relay 7 is also turned off. Thus, the starting performance on the high-µ road can be increased by not only driving the front wheels by the engine 1, but also driving the rear wheels by the motor 5 at the starting of the vehicle such that the vehicle starts running with the four-wheel drive.

A description is next made of the operation in the running on the wet road (low-µ road). The operation during a period from the time t7 to t9 is the same as that during the period from the time t1 to t3.

At a time t9, when the shift position signal (SFT) is in the drive range and the clutch engagement state (CLJUD) takes a value other than 0%, the operation mode determining unit 110 determines the operation mode (MODE) to be the operation mode 5 (MODE5), i.e., the 4WD mode (Fig. 9(G)). Then, the operation mode determining unit 110 notifies the motor torque computing unit 130 of the fact that the operation mode is the operation mode 5 (MODE5), i.e., the 4WD mode.

Because the low-µ road being assumed in this case, if the engine 1 causes a slip, there occurs a difference between the front wheel speed (VWF) and the rear wheel speed (VWR), as shown in Fig. 9(F), and the slip responsive torque (TQDV) computing unit 132 of the motor torque computing unit 130 generates the slip responsive torque (TQDV) corresponding to the front-rear wheel speed difference (DV). With the occurrence of a slip, the torque changing-over unit 133 outputs, as the motor torque target value (MTt), the slip responsive torque (TQDV) corresponding to the front-rear wheel speed difference (DV). Then, until the front-rear wheel speed difference (DV) becomes not larger than 2 km/h, the slip responsive torque (TQDV) corresponding to the front-rear wheel speed difference (DV) is continuously generated as shown in Fig. 9(E).

When the rear wheel speed signal (VWR) shown in Fig. 9(F) reaches, e.g., 30 km/h, the operation mode determining unit 110 determines the commencement of the 4WD-stop sequence mode and notifies the driver unit 120 of the fact that the operation mode is the operation mode 6 (MODE6), i.e., the 4WD-stop sequence mode. Responsively, the driver unit 120 outputs predetermined torque. Here, the predetermined torque means torque corresponding to friction caused by backlash of the differential gear and torsion of the axle. In the 4WD-stop sequence mode, the clutch 4 is disengaged and thereafter the large-capacity relay 7 is also turned off. Thus, the starting performance on the low-µ road can be increased by not only driving the front wheels by the engine 1, but also driving the rear wheels by the motor 5 at the starting of the vehicle such that the vehicle starts running with the four-wheel drive.

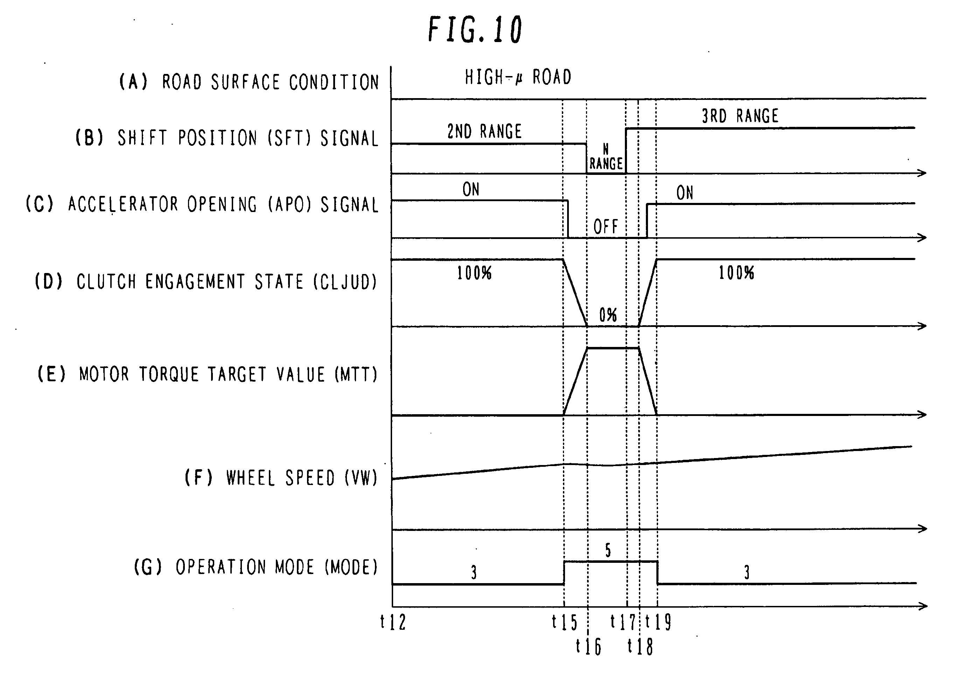

The operation executed at shifting by the controller for the electric four-wheel-drive vehicle according to the embodiment will be described below with reference to Fig. 10.

Fig. 10 is a timing chart showing the operation executed at shifting by the controller for the electric four-wheel-drive vehicle according to one embodiment of the present invention. The vertical axes in (A) to (G) of Fig. 10 represent the same parameters as those in (A) to (G) of Fig. 9. Also, the horizontal axis of Fig. 10 represents time. While the following example is described in connection with the case of a shifting-up from 2ND to 3RD shift, the operation is similarly performed in any other different shifting-up from one to another shift and in any shifting-down. The road surface is assumed to be in high-µ condition as shown in Fig. 10(A).

Referring to Fig. 10, at a time t14, when the shift position signal (SFT) is in a 2ND range as shown in Fig. 10(B), the accelerator opening signal (APO) is turned on as shown in Fig. 10(C), and the clutch engagement state (CLJUD) takes a value of 100% as shown in Fig. 10(D), the operation mode determining unit 110 determines the operation mode (MODE) to be the operation mode 3 (MODE3), i.e., the 2WD mode (Fig. 10(G)). In this case, the motor torque computing unit 130 sets the motor torque target value (MTt) to, e.g., 0 Nm as shown in Fig. 10(E).

At a time t15, when the clutch engagement state (CLJUD) takes a value of smaller than 100% as shown in Fig. 10(D), the operation mode determining unit 110 determines the operation mode (MODE) to be an operation mode 5' (MODE5') during shifting, i.e., a shifting 4WD mode (Fig. 10(G)). Then, the operation mode determining unit 110 notifies the motor torque computing unit 130 of the fact that the operation mode is the operation mode 5' (MODE5'), i.e., the shifting 4WD mode.

The clutch responsive torque (TQCL) computing unit 131 of the motor torque computing unit 130 outputs the clutch responsive torque (TQCL) depending on the clutch engagement state (CLJUD) shown in Fig. 10(D). More specifically, the clutch responsive torque (TQCL) is outputted as a value depending on the clutch engagement state (CLJUD), i.e., a value between 0 Nm and 4.5 Nm, as shown in Fig. 6. As the clutch engagement rate decreases, the clutch responsive torque (TQCL) is increased. On the other hand, since the dry road is assumed in this case, the engine 1 causes no slips and the slip responsive torque (TQDV) computing unit 132 does not generate the slip responsive torque (TQDV). The torque changing-over unit 133 compares the clutch responsive torque (TQCL) and the slip responsive torque (TQDV) with each other and then outputs larger one of them as the motor torque target value (MTt). In other words, as the clutch engagement rate is decreased depending on the gradual progress of the clutch disengagement, the motor torque target value (MTt) is increased as shown in Fig. 10(E).

At a time t16, when the clutch engagement state (CLJUD) takes a value of 0% as shown in Fig. 10(D), the clutch responsive torque (TQCL) computing unit 131 of the motor torque computing unit 130 outputs 4.5 Nm as the clutch responsive torque (TQCL). During a period from the time t16 to t18, the clutch responsive torque (TQCL) computing unit 131 continuously outputs 4.5 Nm as its output torque. The motor torque target value (MTt) is maintained at 4.5 Nm until the clutch engagement state (CLJUD) takes a value of larger than 0% at a time t18 as shown in Fig. 10(D).

At the time t18, when the clutch engagement state (CLJUD) takes a value of larger than 0% as shown in Fig. 10(D), the clutch responsive torque (TQCL) computing unit 131 of the motor torque computing unit 130 outputs the clutch responsive torque (TQCL) depending on the clutch engagement state (CLJUD) as shown in Fig. 10(D). More specifically, the clutch responsive torque (TQCL) is outputted as a value depending on the clutch engagement state (CLJUD), i.e., a value between 0 Nm and 4.5 Nm, as shown in Fig. 6. As the clutch engagement rate increases, the clutch responsive torque (TQCL) is decreased as shown in Fig. 10(E).

At a time t19, when the clutch engagement state (CLJUD) takes a value of 100% as shown in Fig. 10(D), the operation mode determining unit 110 determines the operation mode to be the operation mode 3 (MODE3), i.e., the 2WD mode (Fig. 10(G)). At this time, the motor torque computing unit 130 sets the motor torque target value (MTt) to, e.g., 0 Nm as shown in Fig. 10(E).

During the period from the time t15 to t16 in Fig. 10, as described above, because the clutch is gradually disengaged, the torque transmitted from the engine to the front wheels is reduced correspondingly. During that period, the motor torque is increased as shown in Fig. 10(E). Also, during the period from the time t16 to t17, because the clutch is completely disengaged and the torque transmission from the engine to the front wheels is cut, large motor torque is generated, as shown in Fig. 10(E), to drive the rear wheels. Further, during the period from the time t17 to t18 in Fig. 10, because the clutch is gradually engaged, the torque transmitted from the engine to the front wheels is increased correspondingly. During that period, the motor torque is reduced as shown in Fig. 10(E). Thus, when the clutch is disengaged during the shifting and the torque transmitted from the engine to the front wheels is reduced, a torque drop during the shifting is prevented by generating the torque from the motor to drive the rear wheels. Hence, a smooth change of the wheel speed can be obtained as shown in Fig. 10(F), and running stability of the vehicle during the shifting can be increased.

While the clutch engagement rate is used as indicating a degree of the clutch engagement in the above description, a clutch engagement force, i.e., a pressing force applied from a master cylinder to a clutch plate, can also be used instead. The torque transmitted through the clutch is further usable as another example.

According to the embodiment, as described above, since the motor torque can be outputted in a variable manner depending on the clutch state, it is possible to realize smooth starting and shifting, and to increase stability of the vehicle.

## Claims

1. A controller (6) for an electric four-wheel-drive vehicle in which a first wheel (14R, 14L) is driven by an engine (1), a second wheel (15R, 15L) is driven by a motor (5), and a driving force of said engine (1) is transmitted to said first wheel (14R, 14L) through a manual transmission (12) and a clutch (18), said controller being used in said four-wheel-drive vehicle to control driving of said motor (5),
wherein said controller (6) includes control means adapted to, when said clutch (18) is in a partially engaged state, receive an input signal representing a degree of engagement of said clutch (18) and output a signal to control a driving force of said motor (5) in accordance with the input signal and depending on an engagement force of said clutch (4,18),and
wherein said control means outputs the signal to gradually increase the driving force of said motor (5) as the engagement of said clutch (4,18) is progressed, when said electric four-wheel-drive vehicle starts running and no slips occur in said first and second wheels (14R, 14L, 15R, 15L).

2. The controller (6) for the electric four-wheel-drive vehicle according to Claim 1, wherein said control means outputs the signal to set the driving force of said motor (5) to 0, when said clutch (4) is positioned near a disengaged position thereof.

3. The controller (6) for the electric four-wheel-drive vehicle according to Claims 1 to 2, wherein said control means outputs the signal to set the driving force of said motor (5) to a predetermined driving force, when depression of an accelerator pedal of said electric four-wheel-drive vehicle is detected.

4. The controller (6), according to at claim 1, wherein the control means for, when said clutch (18) is in a partially engaged state, outputting the signal to control a driving force of said motor (5) depending on an engagement rate of said clutch (18).

5. The controller according to at least one of claims 1 to 4, wherein the controller (6) is provided for an electric driving system, wherein said electric driving system comprises a generator (2) driven by said engine (1), said motor (5) for driving said second wheel(15R, 15L), and the controller (6) for controlling electric power generated by said generator (2) and controlling driving of said motor (5).

## Patentansprüche

1. Steuereinheit (6) für ein Elektrofahrzeug mit Vierradantrieb, bei dem ein erstes Rad (14R, 14L) durch eine Kraftmaschine. (1) angetrieben wird, ein zweites Rad (15R, 15L) durch einen Elektromotor (5) angetrieben wird und eine Antriebskraft der Kraftmaschine (1) an das erste Rad (14R, 14L) über ein manuelles Getriebe (12) und eine Kupplung (18) übertragen wird, wobei die Steuereinheit in dem Fahrzeug mit Vierradantrieb verwendet wird, um den Antrieb des Elektromotors (5) zu steuern,
wobei die Steuereinheit (6) Steuermittel enthält, die dafür ausgelegt sind, dann, wenn die Kupplung (18) in einem teilweise eingerückten Zustand ist, ein Eingangssignal, das einen Einrückzustand der Kupplung (18) repräsentiert, zu empfangen und ein Signal', um eine Antriebskraft des Elektromotors (5) in Übereinstimmung mit dem Eingangssignal und in Abhängigkeit von einer Einrückkraft der Kupplung (4, 18) zu steuern, auszugeben, und
wobei die Steuermittel das Signal ausgeben, um die Antriebskraft des Elektromotors (5) allmählich zu erhöhen, wenn das Einrücken der Kupplung (4, 18) fortschreitet, wenn das Elektrofahrzeug mit Vierradantrieb zu fahren beginnt und an dem ersten und an dem zweiten Rad (14R, 14L, 15R, 15L) kein Schlupf auftritt.

2. Steuereinheit (6) für das Elektrofahrzeug mit Vierradantrieb nach Anspruch 1, wobei die Steuermittel das Signal ausgeben, um die Antriebskraft des Elektromotors (5) auf 0 zu setzen, wenn die Kupplung in der Nähe ihrer ausgerückten Position positioniert ist.

3. Steuereinheit (6) für das Elektrofahrzeug mit Vierradantrieb nach den Ansprüchen 1 bis 2, wobei die Steuermittel das Signal ausgeben, um die Antriebskraft des Elektromotors (5) auf eine vorgegebene Antriebskraft einzustellen, wenn das Niederdrücken eines Wahrpedals des Elektrofahrzeugs mit Vierradantrieb detektiert wird.

4. Steuereinheit (6) nach Anspruch 1,
wobei die Steuermittel dann, wenn die Kupplung (18) in einem teilweise eingerückten Zustand ist, das Signal ausgeben, um eine Antriebskraft des Elektromotors (5) in Abhängigkeit von einer Einrückrate der Kupplung (18) zu steuern.

5. Steuereinheit nach wenigstens einem der Ansprüche 1 bis 4, wobei die Steuereinheit (6) für ein elektrisches Antriebssystem vorgesehen ist, wobei das elektrische Antriebssystem einen durch die Kraftmaschine (1) angetriebenen Generator (2), den Elektromotor (5) zum Antreiben des zweiten Rades (15R, 15L) und die Steuereinheit (6) zum Steuern der durch den Generator (2) erzeugten elektrischen Leistung und zum Steuern des Antriebs des Elektromotors (5) umfasst.

## Revendications

1. Contrôleur (6) pour un véhicule électrique à quatre roues motrices dans lequel une première roue (14R, 14L) est entraînée par un moteur (1), une seconde roue (15R, 15L) est entraînée par un moteur (5), et une force d'entraînement dudit moteur (1) est transmise à ladite première roue (14R, 14L) via une boîte de vitesses manuelle (12) et un embrayage (18), ledit contrôleur étant utilisé dans ledit véhicule à quatre roues motrices pour commander l'entraînement dudit moteur (5), dans lequel ledit contrôleur (6) inclut des moyens de commande adaptés à, quand ledit embrayage (18) est dans un état partiellement engagé, recevoir un signal d'entrée représentant un degré d'engagement dudit embrayage (18) et délivrer un signal pour commander une force d'entraînement dudit moteur (5) en accord avec le signal d'entrée et dépendant d'une force d'engagement dudit embrayage (4, 18), et
dans lequel lesdits moyens de commande délivrent le signal pour augmenter progressivement la force d'entraînement dudit moteur (5) lorsque l'engagement dudit embrayage (4, 18) progresse, quand ledit véhicule électrique à quatre roues motrices commence à circuler et qu'il ne se produit aucun glissement dans ladite première et ladite seconde roue (14, R, 14RL, 15R, 15L).

2. Contrôleur (6) pour le véhicule électrique à quatre roues motrices selon la revendication 1, dans lequel lesdits moyens de commande délivrent le signal pour fixer la force d'entraînement dudit moteur (5) à 0 quand ledit embrayage (4) est positionné au voisinage d'une position désengagée de celui-ci.

3. Contrôleur (6) pour le véhicule électrique à quatre roues motrices selon les revendications 1 à 2, dans lequel lesdits moyens de commande délivrent le signal pour fixer la force d'entraînement dudit moteur (5) à une force d'entraînement prédéterminée quand ils détectent un enfoncement d'une pédale d'accélérateur dudit véhicule électrique à quatre roues motrices.

4. Contrôleur (6) selon la revendication 1, dans lequel les moyens de commande sont adaptés à, quand ledit embrayage (18) est dans un état partiellement engagé, délivrer le signal pour commander une force d'entraînement dudit moteur (5) en dépendance d'un taux d'engagement dudit embrayage (18).

5. Contrôleur selon l'une au moins des revendications 1 à 4, dans lequel le contrôleur (6) est prévu pour un système d'entraînement électrique, dans lequel ledit système d'entraînement électrique comprend un générateur (2) entraîné par ledit moteur (1), ledit moteur (5) pour entraîner ladite seconde roue (15R, 15L), et le contrôleur (6) pour commander la puissance électrique générée par ledit générateur (2) et commander l'entraînement dudit moteur (5).
